# EUROPEAN PATENT SPECIFICATION

(11) **EP 3 252 278 B1**
(45) Date of publication and mention of the grant of the patent: **06.05.2020**
(21) Application number: 17173512.9
(22) Date of filing: 30.05.2017
(51) Int. Cl.: F01D 25/00

(54) **HIGH TEMPERATURE COMPOSITES WITH ENHANCED MATRIX**
HOCHTEMPERATURVERBUNDWERKSTOFFE MIT VERBESSERTER MATRIX
COMPOSITES HAUTE TEMPÉRATURE AYANT UNE MATRICE AMÉLIORÉE

(30) Priority: 31.05.2016 US 201615168522
(43) Date of publication of application: 06.12.2017
(73) Proprietor: United Technologies Corporation, Farmington, CT 06032 (US)
(72) Inventor: Schmidt, Wayde R., Pomfret Center, CT Connecticut 06259 (US); Sheedy, Paul, Bolton, CT Connecticut 06043 (US); Magdefrau, Neal, Tolland, CT Connecticut 06084 (US)
(74) Representative: Dehns

(56) References cited:
- EP-A1- 2 930 160
- EP-A2- 2 530 185
- WO-A1-2014/199075
- WO-A1-2015/041802
- US-A1- 2006 280 953

## Description

### BACKGROUND

The present disclosure is directed to composite articles such as those used in gas turbine engines.

Components, such as gas turbine engine components, may be subjected to high temperatures, corrosive and oxidative conditions, and elevated stress levels.

There is an ongoing need to provide increased temperature capability, environmental stability and strength retention to advanced coatings, monolithic ceramics, ceramic matrix composites and other high temperature material systems for aerospace propulsion equipment. Existing glass and ceramic matrix composites generally suffer from poor thermal conductivity of the matrix.

WO2015/041802 discloses an article coated with a coating which includes a compound of aluminum, boron and nitrogen in a continuous chemically bonded network having Al-N bonds and B-N bonds. EP2930160 discloses a method of forming a boron nitride reaction product locally on a reinforcement phase of a ceramic matrix composite material.

### SUMMARY

In accordance with the present disclosure, there is provided a composite article (e.g. a turbine engine component) as set forth in claim 1.

The silicon containing material is selected from the group consisting of glass, glass/ceramic, monolithic ceramic, and ceramic matrix composite.

In another and alternative embodiment, the boron nitride nanotubes are one of chemically modified and physically modified with one or more additional layer(s), preferably wherein the additional layers comprise coatings of oxide materials selected from the group consisting of Al, Si, Ba, Ti, Y, La, Ga, Ta, Zr, Hf, Sr, Ca and the like and combinations thereof, or wherein the additional layer(s) comprise(s) coatings of oxide materials selected from the group consisting of oxides of Al, Si, Ba, Ti, Y, La, Ga, Ta, Zr, Hf, Sr, Ca and the like and combinations thereof.

In another and alternative embodiment, the additional layers may be comprised of other compositions such as nitrides, borides, carbides, oxycarbides, oxynitrides, carbonitrides, carbon, metals, or combinations thereof.

In another and alternative embodiment, the modification comprises atomic layer deposition.

In another and alternative embodiment, the composite article further comprises at least one of an environmental barrier coating, a thermal barrier coating, a velocity barrier, an abradable coating, and erosion resistant coating coupled to the substrate.

In another and alternative embodiment, the substrate comprises at least one of a material formed of a single, continuous mass of material and a composite of several different ceramic materials, carbon-based material or ceramic and metallic and carbon-based material.

In another and alternative embodiment, the additive is uniformly dispersed in at least one of the substrate and at least one of an environmental barrier coating, a thermal barrier coating, a velocity barrier, an abradable coating, and an erosion resistant coating coupled to the substrate.

In another and alternative embodiment, the turbine engine component further comprises at least one of an environmental barrier coating, a thermal barrier coating, a velocity barrier, an abradable coating, and an erosion resistant coating coupled to the substrate.

In another and alternative embodiment, the boron nitride nanotubes are one of chemically modified and physically modified with one or more additional layer(s), preferably wherein the additional layers comprise coatings of selected from the group consisting of Al, Si, Ba, Ti, Y, La, Ga, Ta, Zr, Hf, Sr, Ca and the like and combinations thereof or wherein the additional layer(s) comprise(s) coatings of oxide materials selected from the group consisting of oxides of Al, Si, Ba, Ti, Y, La, Ga, Ta, Zr, Hf, Sr, Ca and the like and combinations thereof.

In an embodiment, the modification comprises atomic layer deposition.

In another and alternative embodiment, the additive is uniformly dispersed in at least one of the substrate and at least one of an environmental barrier coating, a thermal barrier coating, a velocity barrier, an abradable coating, and an erosion resistant coating coupled to the substrate.

In another and alternative embodiment, the substrate comprises at least one of a material formed of a single, continuous mass of material and a composite of several different ceramic materials, carbon-based material or ceramic and metallic and carbon-based material.

In another and alternative embodiment, the turbine engine component is selected from the group consisting of a combustor liner, an airfoil, a turbine blade or vane, a compressor blade or vane, blade outer air seal.

In accordance with the present disclosure, there is provided a process as set forth in claim 8.

The composite material is formed from a silicon-containing material.

The silicon-containing material is selected from the group consisting of glass, glass/ceramic, monolithic ceramic, and ceramic matrix composite, or the silicon containing material is selected from the group consisting of glass, glass/ceramic and ceramic matrix composite.

In another and alternative embodiment, the process further comprises modifying the boron nitride nanotubes by adding additional layers to the boron nitride nanotubes, or by adding at least one additional layer to said boron nitride nanotubes.

In an embodiment, the modification comprises atomic layer deposition.

In another and alternative embodiment, the additional layer(s) comprise(s) coatings of oxide materials selected from the group consisting of (e.g. oxides of) Al, Si, Ba, Ti, Y, La, Ga, Ta, Zr, Hf, Sr, Ca and the like and combinations thereof. In an embodiment, the at least one additional layer comprises coatings of selected from the group consisting of Al, Si, Ba, Ti, Y, La, Ga, Ta, Zr, Hf, Sr, Ca and the like and combinations thereof.

In an embodiment, the composite material comprises at least one of a material formed of a single, continuous mass of material and a composite of several different ceramic materials, carbon-based material or ceramic and metallic and carbon-based material.

In another and alternative embodiment, the process further comprises coating the composite material with at least one of an environmental barrier coating, a thermal barrier coating, a velocity barrier, an abradable coating, and an erosion resistant coating.

In another and alternative embodiment, the process further comprises uniformly dispersing the additive throughout at least one of the composite material and at least one of the environmental barrier coating, the thermal barrier coating, the velocity barrier, the abradable coating, and the erosion resistant coating.

Other details of the coated boron nitride nanotube enhanced composites are set forth in the following detailed description and the accompanying drawing wherein like reference numerals depict like elements.

### BRIEF DESCRIPTION OF THE DRAWINGS

FIG. 1 schematically illustrates an example composite article that is a turbine blade.
FIG. 2 schematically illustrates a cross-section of a portion of a composite article having an enhanced matrix that includes boron nitride nanotubes.
FIG. 3 schematically illustrates a cross-section of a portion of a layered structure having an intermediate layer with discrete regions of boron nitride nanotubes.
FIG. 4 is a process diagram of an exemplary method.

### DETAILED DESCRIPTION

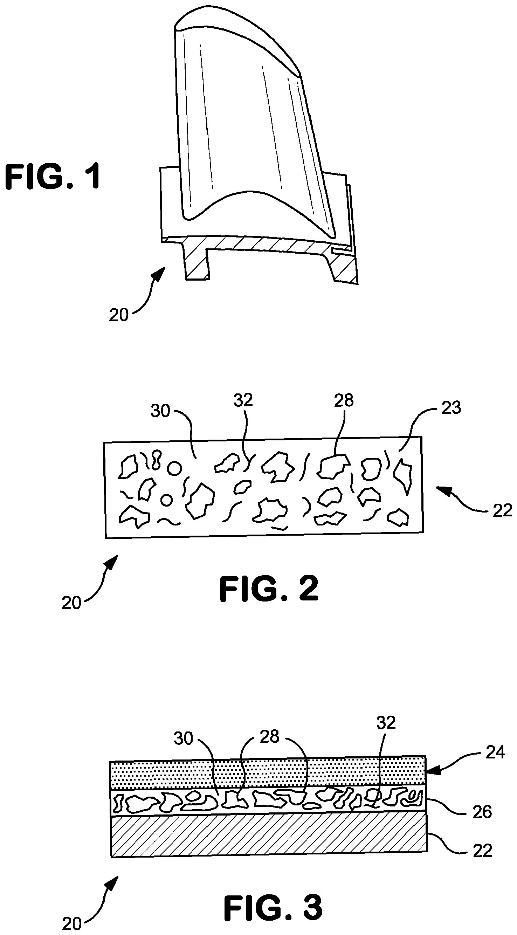

FIG. 1 shows a composite article 20. In this example, the composite article 20 is a turbine blade for a gas turbine engine, although this disclosure is not limited to such components. The composite article 20 may alternatively be a combustor liner, a turbine vane, compressor blade or vane, an airfoil, a blade outer air seal or other component that would benefit from this disclosure. It is also to be understood that the composite article 20 is not limited to components that are used for gas turbine engines and that components in other fields that are subjected to harsh thermal and environmental conditions will also benefit from this disclosure.

FIGs. 2 and 3 show a cross-section of a portion of the composite article 20. As an example, the portion may be from the airfoil-shaped blade section of the turbine blade. The composite article 20 includes a substrate 22, at least one protective layer 24 on the substrate, and an intermediate layer 26 between the protective layer 24 and the substrate 22. The protective layer 24, or layers, and the intermediate layer 26, or layers, may together be considered to be an environmental barrier coating, thermal barrier coating, velocity barrier, abradable coating, or erosion resistant coating, depending upon the materials selected for the respective layers 24 and 26.

The substrate 22 in the illustrated example comprises a ceramic material, a glass or glass/ceramic, carbon or combinations thereof. The ceramic material may include carbides, oxides, nitrides, borides, silicides, oxycarbides, oxynitrides, carbonitrides, aluminides, silicates, titanates, phosphates, phosphides, or combinations thereof. The glass and glass/ceramic materials may include silica, borosilicates, barium aluminosilicates, lanthanum aluminosilicates, strontium magnesium silicates, barium magnesium aluminosilicates, calcium magnesium aluminosilicates and lithium-containing glasses, silicates or aluminosilicates.

The substrate 22 in the illustrated example may be monolithic (i.e., formed of a single, continuous mass of material) or a composite of several different ceramic materials, carbon-based material or ceramic and metallic and carbon-based materials. In one example, the substrate 22 is a ceramic matrix composite 23, where the ceramic matrix material forms a continuous phase 30, in which at least one reinforcement phase of another material 28, 32, is distributed. The reinforcement phase can be a discontinuous phase of another material, such as a filler or particulate, or the reinforcement phase can be a continuous phase, such as fibers. Combinations of reinforcement phases are also contemplated. The reinforcing phase may also consist of chopped fibers. The ceramic matrix 30 may be selected from carbides, oxides, nitrides, borides, silicides, oxycarbides, oxynitrides, carbonitrides, aluminides, silicates, titanates, phosphates, phosphides, borosilicate and aluminosilicate glasses or combinations thereof.

In a further example, the ceramic material includes a silicon-containing ceramic material, such as silicon carbide, silicon oxycarbide, silicon nitride, silicon oxynitride, or a glass, glass/ceramic material, or other oxide, carbide, nitride, boride, or combination thereof that includes silicon. Additional examples of desirable ceramic materials include boron-containing ceramic materials, titanium-containing ceramic materials, aluminum-containing ceramic materials, molybdenum-containing ceramic materials and barium-containing ceramic materials.

The ceramic matrix composite 23 can contain a filler/fiber or particulate additive 32 comprising boron nitride nanotubes (BNNT). The incorporation of the boron nitride nanotubes enhances the thermal and mechanical performance of the glass, glass/ceramic, and ceramic matrix composite 23 system. Boron nitride nanotubes are materials that exhibit high chemical stability, thermal stability (up to 800C in air), excellent thermal conductivity, a very high Youngs modulus (up to 1.3 TPa), piezoelectricity, the ability to suppress thermal neutron radiation, and, as a matted fabric, display super-hydrophobicity.

The additive 32 can include coated BNNT. The BNNT can be chemically or physically modified with an additional layer or layers, by Atomic Layer Deposition, for example, to provide desirable compositions that further enable the glass, glass/ceramic or ceramic system. Additional, non-limiting coating methods are also contemplated including chemical and physical vapor deposition, plasma deposition, solution and slurry-based processing. In one example, Atomic Layer Deposition coatings of various oxides, selected from the group consisting of Al, Si, Ba, Ti, Y, La, Ga, Ta, Zr, Hf, Sr, Ca and the like and combinations thereof can be selected and deposited to enhance the interaction between the reinforcement nanotubes and the glass, glass/ceramic or ceramic matrix or coating.

FIG. 3 shows a cross-section of a portion of a composite article 20 that is similar to the composite article 20 shown in FIG. 2 with regard to the substrate 22 and protective layer 24. An intermediate layer 26, between the substrate 22 and protective layer 24, includes silicon oxycarbide, as described above. In this example, the silicon oxycarbide occupies a plurality of discrete regions 28 within the intermediate layer 26. The regions 28 are perceptibly distinct (e.g., by metallographic techniques) and may be approximately 1-250 micrometers in average diameter. In one example, the silicon oxycarbide of the regions 28 is nominally, substantially or fully dense silicon oxycarbide, as described above. The regions 28 of silicon oxycarbide and boron nitride nanotube additive 32 are dispersed within a matrix region 30. In the illustrated example, the matrix region 30 is continuous and generally surrounds the regions 28, although in other examples the silicon oxycarbide is the continuous matrix in which another material is dispersed. The intermediate layer 26 may be of a desired thickness for protecting the underlying substrate 22. For example, the intermediate layer 26 may be 10-1000 micrometers thick and in some examples is 25-500 micrometers thick.

The material of the matrix region 30 is or includes carbides, oxides, nitrides, borides, silicides, oxycarbides, oxynitrides, carbonitrides, aluminides, silicates, titanates, phosphates, phosphides, or combinations thereof. In further examples, the matrix region 30 includes hafnium, yttrium, molybdenum, silicon dioxide, silicon carbide or combinations thereof. In one example, the material of the matrix region 30 includes hafnia (HfO₂). In other examples, the silicate material of the matrix region 30 may include a rare earth element silicate material that includes a rare earth element selected from the 15 lanthanide series elements, yttrium and scandium. In one example, the material of the matrix region 30 contains yttrium silicate. The ratio of the rare earth element to silica may vary between 1:0.8 and 1:4 by mole content. In another example, the material of the matrix region 30 includes molybdenum disilicide (MOSi₂). Alternatively, or in combination with the above example materials, the material of the matrix region 30 includes at least one of silicon dioxide (SiO₂) or silicon carbide (SiC).

In a further example, the material of the matrix region 30 is a silicate material. For instance, the silicate material is a refractory metal silicate, a rare earth metal silicate or combination thereof. In one example, the silicate is a silicate of a rare earth metal, hafnium and zirconium. Refractory metals include niobium, molybdenum, tantalum, tungsten, rhenium, titanium, vanadium, chromium, zirconium, hafnium, ruthenium, osmium, iridium and combinations thereof. Rare earth metals include the fifteen lanthanide elements, scandium, yttrium and combinations thereof.

In a further example, the material of the matrix region 30 is an oxide material. For instance, the oxide material is a refractory metal oxide, such as hafnia, yttria, rare earth oxide, or combination thereof.

The amount of boron nitride nanotube additive 32 in the intermediate layer 26 may be varied depending upon the properties desired for the end use application. The BNNT provides the composite article 20 with thermal/oxidative stability and thermal expansion matching between the substrate and the protective layer 24. The thermal and oxidative stability of the silicon oxycarbide may be enhanced through the addition of the materials 32 of the matrix region 30. In that regard, the amount of silicon oxycarbide may be varied relative to the amount of additive material 32 in the matrix region 30 and the total amount of additive material 32 in the intermediate layer 26.

The additive 32 can be incorporated into the matrix 30 at any of various stages of ceramic composite manufacture. The additive 32 of BNNT can be incorporated into the glass slurry that coats fiber preforms. The additive 32 can be incorporated at a distinct step. Heat treatment of the composite 22 can be altered or adjusted. Any of the manufacturing processes can be employed to create the composite 22, such as by use of fiber preforms with resin or glass transfer molding for more complex geometries and compression molding for simpler geometries.

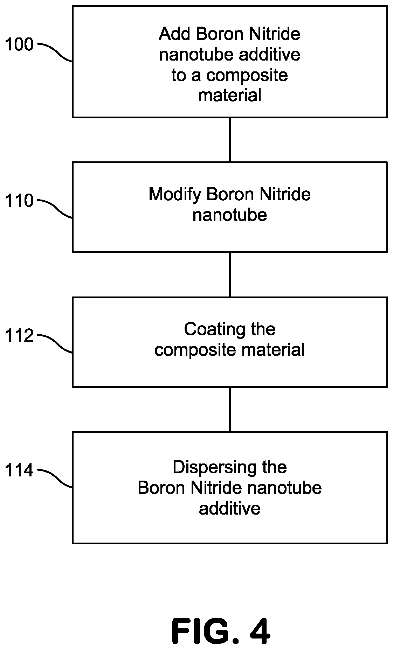

Fig. 4 illustrates an exemplary process for enhancing the thermal and mechanical properties of a composite material. At step 100 the thermal and mechanical properties of the composite material can be enhanced by adding a boron nitride nanotube additive to the composite material formed from a silicon-containing material. At step 110 the process includes modifying the boron nitride nanotubes by adding at least one additional layer to the boron nitride nanotubes. The process further includes the additional layers can comprise coatings of oxide materials selected from the group consisting of Al, Si, Ba, Ti, Y, La, Ga, Ta, Zr, Hf, Sr, Ca and the like and combinations thereof. In the process at step 112, the process further comprises coating the composite material with at least one of an environmental barrier coating, a thermal barrier coating, a velocity barrier, an abradable coating, and an erosion resistant coating. At 114, the process further comprises uniformly dispersing the additive throughout at least one of the composite material and at least one of the environmental barrier coating, the thermal barrier coating, the velocity barrier, the abradable coating, and the erosion resistant coating.

BNNT, coated or uncoated, provides the following potential benefits to glass, glass/ceramic and ceramic matrix composites, monoliths and composite matrices: enhanced mechanical strength by bridging micro cracks, enhanced thermal conductivity, enhanced composition control by selection of coating chemistry to drive certain grain growth or crystalline phase development and improved mechanical performance by pull-out along BNNT/glass interface, especially when BNNT coating is properly designed.

Specific to glass or glass/ceramic matrix composites or coatings having low thermal conductivity but otherwise excellent composite attributes, BNNT additive/filler/reinforcements are expected to significantly increase the thermal conductivity of matrices such as those containing lithium-aluminosilicate (LAS), barium magnesium-aluminosilicate (BMAS), calcium-magnesium-aluminosilicate (CMAS) or other highly refractory aluminosilicates. Additional examples of desirable ceramic materials include boron-containing ceramic materials, titanium-containing ceramic materials, aluminum-containing ceramic materials, molybdenum-containing ceramic materials and barium-containing ceramic materials.

## Claims

1. A composite article (20) for a turbine engine comprising:
a substrate (22), said substrate (22) comprising a silicon containing material selected from the group consisting of glass, glass/ceramic, monolithic ceramic and ceramic matrix composite and
an additive (32);
**characterized in that** said additive (32) comprises boron nitride nanotubes.

2. The composite article (20) according to claim 1, wherein said article (20) is a turbine engine component.

3. The composite article (20) according to any one of the preceding claims, wherein said boron nitride nanotubes are one of chemically modified and physically modified with one or more additional layers, preferably wherein said additional layer(s) comprise(s) coatings of oxide materials selected from the group consisting of oxides of Al, Si, Ba, Ti, Y, La, Ga, Ta, Zr, Hf, Sr, Ca and the like and combinations thereof, and/or wherein said modification comprises atomic layer deposition.

4. The composite article (20) according to any one of the preceding claims, further comprising:
at least one of an environmental barrier coating, a thermal barrier coating, a velocity barrier, an abradable coating, and erosion resistant coating coupled to said substrate (22).

5. The composite article (20) according to any one of the preceding claims, wherein said substrate (22) comprises at least one of a material formed of a single, continuous mass of material and a composite of several different ceramic materials, carbon-based material or ceramic and metallic and carbon-based material.

6. The composite article (20) according to any one of the preceding claims, wherein said additive (32) is uniformly dispersed in at least one of the substrate (22) and at least one of an environmental barrier coating, a thermal barrier coating, a velocity barrier, an abradable coating, and an erosion resistant coating coupled to said substrate.

7. The composite article (20) according to any one of claims 2 to 6, wherein the turbine engine component is selected from the group consisting of a combustor liner, an airfoil, a turbine blade or vane, a compressor blade or vane, blade outer air seal.

8. A process for enhancing the thermal and mechanical properties of a composite material of a turbine engine component, said process comprising:
adding an additive (32) to said composite material formed from a silicon-containing material selected from the group consisting of glass, glass/ceramic, monolithic ceramic and ceramic matrix composite;
**characterized in that** said additive (32) comprises boron nitride nanotubes.

9. The process of claim 8, further comprising:
modifying said boron nitride nanotubes by adding at least one additional layer to said boron nitride nanotubes.

10. The process of claim 9, wherein said at least one additional layer comprises coatings of at least one oxide material selected from the group consisting of oxides of Al, Si, Ba, Ti, Y, La, Ga, Ta, Zr, Hf, Sr, Ca and the like and combinations thereof

11. The process of any one of claims 8 to 10, further comprising:
coating said composite material with at least one of an environmental barrier coating, a thermal barrier coating, a velocity barrier, an abradable coating, and an erosion resistant coating.

12. The process of claim 11, further comprising:
uniformly dispersing the additive throughout at least one of the composite material and at least one of the environmental barrier coating, the thermal barrier coating, the velocity barrier, the abradable coating, and the erosion resistant coating.

## Patentansprüche

1. Verbundartikel (20) für ein Turbinentriebwerk, Folgendes umfassend:
ein Substrat (22), wobei das Substrat (22) ein silikonenthaltendes Material umfasst, das aus der Gruppe ausgewählt ist, die aus Glas, Glas/Keramik, monolithischer Keramik und keramischem Matrix-Verbundwerkstoff besteht, und
ein Additiv (32);
**dadurch gekennzeichnet, dass** das Additiv (32) Bornitrid-Nanoröhrchen umfasst.

2. Verbundartikel (20) gemäß Anspruch 1, wobei der Artikel (20) eine Turbinentriebwerkkomponente ist.

3. Verbundartikel (20) nach einem der vorangehenden Ansprüche, wobei die Bornitrid-Nanoröhrchen eines von chemisch modifiziert und physisch modifiziert mit einer oder mehreren zusätzlichen Schichten sind, wobei die zusätzliche(n) Schicht(en) vorzugsweise Oxidmaterialbeschichtungen umfassen, die aus der Gruppe ausgewählt sind, die aus Oxiden von Al, Si, Ba, Ti, Y, La, Ga, Ta, Zr, Hf, Sr, Ca und dergleichen sowie Kombinationen davon besteht, und/oder wobei die Modifikation eine Atomlagenabscheidung umfasst.

4. Verbundartikel (20) nach einem der vorangehenden Ansprüche, ferner umfassend:
mindestens eine von einer Umweltsperrschicht, einer Wärmesperrschicht, eine Geschwindigkeitssperre, einer abreibbaren Beschichtung und einer erosionsbeständigen Beschichtung, die an das Substrat (22) gekoppelt ist.

5. Verbundartikel (20) nach einem der vorangehenden Ansprüche, wobei das Substrat (22) mindestens eines von einem aus einer einzelnen, fortlaufenden Materialmasse gebildeten Material und einem Verbundwerkstoff aus verschiedenen Keramikmaterialien, kohlenstoffbasiertem Material oder keramischem und metallischem und kohlenstoffbasiertem Material umfasst.

6. Verbundartikel (20) nach einem der vorangehenden Ansprüche, wobei das Additiv (32) auf mindestens einem von dem Substrat (22) und mindestens einer von einer Umweltsperrschicht, einer Wärmesperrschicht, einer Geschwindigkeitssperre, einer abreibbaren Beschichtung und einer erosionsbeständigen Beschichtung, die an das Substrat gekoppelt ist, gleichmäßig verteilt ist.

7. Verbundartikel (20) nach einem der Ansprüche 2 bis 6, wobei die Turbinentriebwerkkomponente aus der Gruppe ausgewählt ist, die aus einer Brennkammerwand, einer Schaufel, einer Turbinenlaufschaufel oder -leitschaufel, einer Verdichterlaufschaufel oder -leitschaufel, einer äußeren Laufschaufeldichtung besteht.

8. Verfahren zum Verbessern der thermischen und mechanischen Eigenschaften eines Verbundmaterials einer Turbinentriebwerkkomponente, wobei das Verfahren Folgendes umfasst:
Hinzufügen eines Additivs (32) zu dem Verbundmaterial, das aus der Gruppe ausgewählt ist, die aus Glas, Glas/Keramik, monolithischer Keramik und keramischem Matrix-Verbundwerkstoff besteht;
**dadurch gekennzeichnet, dass** das Additiv (32) Bornitrid-Nanoröhrchen umfasst.

9. Verfahren nach Anspruch 8, ferner umfassend:
Modifizieren der Bornitrid-Nanoröhrchen durch Hinzufügen mindestens einer zusätzlichen Schicht zu den Bornitrid-Nanoröhrchen.

10. Verfahren nach Anspruch 9, wobei die mindestens eine zusätzliche Schicht Beschichtungen aus mindestens einem Oxidmaterial umfasst, das aus der Gruppe ausgewählt ist, die aus Oxiden von Al, Si, Ba, Ti, Y, La, Ga, Ta, Zr, Hf, Sr, Ca und dergleichen sowie Kombinationen davon besteht.

11. Verfahren nach einem der Ansprüche 8 bis 10, ferner umfassend:
Beschichten des Verbundmaterials mit mindestens einer von einer Umweltsperrschicht, einer Wärmesperrschicht, einer Geschwindigkeitssperre, einer abreibbaren Beschichtung und einer erosionsbeständigen Beschichtung.

12. Verfahren nach Anspruch 11, Folgendes umfassend:
gleichmäßiges Verteilen des Additivs auf mindestens einem von dem Verbundmaterial und mindestens einer der Umweltsperrschicht, der Wärmesperrschicht, der Geschwindigkeitssperre, der abreibbaren Beschichtung und der erosionsbeständigen Beschichtung.

## Revendications

1. Article composite (20) pour un moteur à turbine comprenant :
un substrat (22), ledit substrat (22) comprenant un matériau contenant du silicium choisi dans le groupe composé de verre, de verre/céramique, de céramique monolithique et de composite à matrice céramique et
un additif (32) ;
**caractérisé en ce que** ledit additif (32) comprend des nanotubes de nitrure de bore.

2. Article composite (20) selon la revendication 1, dans lequel ledit article (20) est un composant de moteur à turbine.

3. Article composite (20) selon l'une quelconque des revendications précédentes, dans lequel lesdits nanotubes de nitrure de bore sont l'un de chimiquement modifiés et physiquement modifiés avec une ou plusieurs couches supplémentaires, de préférence dans lequel ladite ou lesdites couches supplémentaires comprennent des revêtements de matériaux oxydes choisis dans le groupe composé d'oxydes d'Al, de Si, de Ba, de Ti, d'Y, de La, de Ga, de Ta, de Zr, de Hf, de Sr, de Ca et analogues et leurs combinaisons, et/ou dans lequel ladite modification comprend un dépôt de couche atomique.

4. Article composite (20) selon l'une quelconque des revendications précédentes, comprenant en outre :
au moins l'un parmi un revêtement barrière environnementale, un revêtement barrière thermique, une barrière de vitesse, un revêtement abradable et un revêtement résistant à l'érosion couplé audit substrat (22).

5. Article composite (20) selon l'une quelconque des revendications précédentes, dans lequel ledit substrat (22) comprend au moins l'un d'un matériau formé d'une seule masse continue de matériau et d'un composite de plusieurs matériaux céramiques différents, d'un matériau à base de carbone ou d'un matériau céramique et métallique et à base de carbone.

6. Article composite (20) selon l'une quelconque des revendications précédentes, dans lequel ledit additif (32) est uniformément dispersé dans au moins l'un du substrat (22) et au moins l'un d'un revêtement barrière environnementale, d'un revêtement barrière thermique, d'une barrière de vitesse, d'un revêtement abradable et d'un revêtement résistant à l'érosion couplé audit substrat.

7. Article composite (20) selon l'une quelconque des revendications 2 à 6, dans lequel le composant de moteur à turbine est choisi dans le groupe composé d'une chemise de chambre de combustion, d'un profil aérodynamique, d'une pale ou aube de turbine, d'une pale ou aube de compresseur, d'un joint d'étanchéité à l'air extérieur de pale.

8. Procédé pour améliorer les propriétés thermiques et mécaniques d'un matériau composite d'un composant de moteur à turbine, ledit procédé comprenant:
l'ajout d'un additif (32) audit matériau composite formé d'un matériau contenant du silicium choisi dans le groupe composé de verre, verre/céramique, céramique monolithique et composite à matrice céramique ;
**caractérisé en ce que** ledit additif (32) comprend des nanotubes de nitrure de bore.

9. Procédé selon la revendication 8, comprenant en outre :
la modification desdits nanotubes de nitrure de bore en ajoutant au moins une couche supplémentaire auxdits nanotubes de nitrure de bore.

10. Procédé selon la revendication 9, dans lequel ladite au moins une couche supplémentaire comprend des revêtements d'au moins un matériau oxyde choisi dans le groupe composé d'oxydes d'Al, de Si, de Ba, de Ti, d'Y, de La, de Ga, de Ta, de Zr, de Hf, de Sr, de Ca et analogues et leurs combinaisons.

11. Procédé selon l'une quelconque des revendications 8 à 10, comprenant en outre :
le revêtement dudit matériau composite avec au moins l'un d'un revêtement barrière environnementale, d'un revêtement barrière thermique, d'une barrière de vitesse, d'un revêtement abradable et d'un revêtement résistant à l'érosion.

12. Procédé selon la revendication 11, comprenant en outre :
la dispersion uniforme de l'additif à travers au moins l'un du matériau composite et au moins l'un du revêtement barrière environnementale, du revêtement barrière thermique, de la barrière de vitesse, du revêtement abradable et du revêtement résistant à l'érosion.
